(19) Europäisches Patentamt
European Patent Office
Office européen des brevets

(11) **EP 2 093 505 B1**

(12) **EUROPÄISCHE PATENTSCHRIFT**

(45) Veröffentlichungstag und Bekanntmachung des Hinweises auf die Patenterteilung:
**04.04.2018   Patentblatt 2018/14**

(21) Anmeldenummer: **08016844.6**

(22) Anmeldetag: **25.09.2008**

(51) Int Cl.:
*F24F 5/00* *(2006.01)*        *F24F 13/22* *(2006.01)*
*B32B 5/02* *(2006.01)*        *B32B 27/02* *(2006.01)*
*B32B 27/36* *(2006.01)*        *D06M 13/355* *(2006.01)*
*D06M 13/358* *(2006.01)*        *D06M 17/04* *(2006.01)*
*D06M 17/06* *(2006.01)*        *D06M 17/10* *(2006.01)*
*F28F 13/04* *(2006.01)*

(54) **Klimatisierungskörper mti einem Antibeschlagmittel**

Climatisation element with a de-mister agent

Élément de climatisation comprenant un produit antibuée

(84) Benannte Vertragsstaaten:
**AT BE BG CH CY CZ DE DK EE ES FI FR GB GR HR HU IE IS IT LI LT LU LV MC MT NL NO PL PT RO SE SI SK TR**

(30) Priorität: **21.02.2008   DE 202008002444 U**

(43) Veröffentlichungstag der Anmeldung:
**26.08.2009   Patentblatt 2009/35**

(73) Patentinhaber: **Mostafa, Kamal**
**Gizeh (EG)**

(72) Erfinder: **Mostafa, Kamal**
**Gizeh (EG)**

(74) Vertreter: **Eisenführ Speiser**
**Patentanwälte Rechtsanwälte PartGmbB**
**Am Kaffee-Quartier 3**
**28217 Bremen (DE)**

(56) Entgegenhaltungen:
**EP-A1- 0 552 690        EP-A2- 1 225 398**
**EP-A2- 1 512 915        DE-A1- 4 005 914**
**DE-A1- 10 012 997        US-A- 5 931 381**

**Beschreibung**

Gegenstand der vorliegenden Erfindung ist die Verwendung eines grundsätzlich bekannten Werkstoffes als Antibeschlagmittel. Genauso betrifft die Erfindung die Verwendung dieses grundsätzlich bekannten Werkstoffes als Antibeschlagmittel für Klimatisierungskörper wie zum Beispiel Rollbondelemente und Paneele, die von einem Klimatisierungsmedium, zum Beispiel kaltem Wasser, durchströmbar sind. Der derart gekühlten Oberflächen der Klimatisierungskörper vermögen die Umgebungsluft zu kühlen. Das dabei auftauchende Problem der Kondensation kann durch das vorgeschlagene Antibeschlagmittel wirksam und überlegen gelöst werden.

Die Erfindung betrifft im gleichen Maße auch Klimatisierungskörper, die mit den vorgeschlagenen Antikondensationsmitteln versehen sind.

Kommt feuchte Luft in Kontakt mit einer Festkörperoberfläche, deren Temperatur unterhalb der Lufttemperatur liegt, ist Kondensation dann zu beobachten, wenn die Temperatur der Festkörperoberfläche auch unterhalb der Taupunkttemperatur liegt.

Um bei einem Festkörper die Kondensation in Tröpfchenform zu vermeiden, werden häufig Antikondensationsbeschichtungen und -farbaufträge eingesetzt. So schlägt beispielsweise die DE-A-101 13 281 eine Folie vor, in deren Inneres Antifog-Additive, beispielsweise Glycerolester, ethoxylierte Sorbitanester und ethoxylierte Amine eingebunden sind. Allgemein senken derart bekannte Antifog-Additive den Kontaktwinkel gegenüber Wasser und bewirken letztendlich die Ausbildung eines einheitlichen transparenten Wasserfilms auf der Folienoberfläche. Statt der unerwünschten Tröpfchenbildung kommt es zu kontinuierlich abfließendem Wasser.

Aus DE 100 12 997 A1 ist eine Kondensat-Absorptionsmatte zum Aufnehmen und Ableiten von Kondensationswasser aus der Luftfeuchte bekannt. Die Absorptionsmatte weist Laminatschichten aus Polyestervlies auf, mit denen ein bis zwei Kilogramm Kondensat pro Quadratmeter Matte aufgenommen und gezielt abgeleitet werden.

EP 1 512 915 A2 offenbart eine Strahlplatte zur Verwendung zum Heizen und/oder Kühlen eines Gebäudes. Die Strahlplatte umfasst einen Plattenkörper, der innenseitig mit einer Fluidleitung aus einer Vielzahl von Reihen ausgerüstet ist. Zwischen der Fluidleitung und der Innenseite des Plattenkörpers ist eine Zwischenlage aus Gewebe oder Vlies vorgesehen, die als Sichtschutz und zur Geräuschreduzierung dient.

Aus der Veröffentlichung EP 0 552 690 A1 ist eine Raumkühldecke mit einer Deckenplatte bekannt. Die Deckenplatte weist Durchtrittsöffnungen auf, die durch ein auf der Ober- oder Unterseite angeordnetes Vlies verdeckt werden und als Strömungswiderstand für einen durch die Öffnungen hindurchströmenden Luftstrom dienen.

In eine völlig andere Richtung weist ein Vorschlag gemäß der EP-B-0 844 006 und dem darin gewürdigten Stand der Technik. Hier soll entstehendes Kondensationswasser mit wasserabsorbierenden Polymeren im Inneren des beschichteten Festkörpers gespeichert werden. Nachteilig zumindest an diesem Stand der Technik ist die Tatsache, dass ein derartiges Antibeschlagmittel nicht kontinuierlich, sondern nur zyklisch eingesetzt werden kann, da nach kurzer Verweilzeit des Festkörpers in feuchter Luft die Aufnahmekapazität der wasserabsorbierenden Polymere erreicht ist.

Werden die bekannten Antikondensationsbeschichtungen und -farbaufträge auf die Oberfläche von Klimatisierungskörpern aufgetragen, die insbesondere in sehr warmen und feuchten Räumen eingesetzt werden sollen, wie beispielsweise in Produktionshallen oder auch innerhalb von Wohnräumen in tropischen Gebieten bzw. in Ländern mit sehr warmem und gegebenenfalls feuchtem Klima, wie beispielsweise in Ländern Vorderasiens, besteht das Problem, dass die dort auftretenden Taupunkttemperaturen - jeweils bestimmt durch die Temperatur und die Luftfeuchtigkeit der Umgebungsluft - zum einen sehr hoch liegen. Zum anderen sollte die Oberflächentemperatur des Klimatisierungskörpers - bestimmt durch die Temperatur des Kühlmittels, üblicherweise Wasser, im Inneren des Klimatisierungskörpers - möglichst niedrig liegen, um eine hohe Leistung des Klimatisierungskörpers zu gewährleisten. Dabei wird diese Leistung beschrieben durch Formel (1):

$$\text{Formel (1)}$$

$$P = \propto \Delta T$$

mit:

P = Leistung des Klimatisierungskörpers

∝ = Funktion von

$\Delta T$ = Differenztemperatur zwischen Temperatur des Wassers im Inneren des Klimatisierungskörpers und der Temperatur der Umgebungsluft

Fällt jedoch die Oberflächentemperatur des Klimatisierungskörpers unterhalb der Taupunkttemperatur der Umgebungsluft, kommt es zur Kondensation an der Oberfläche des Klimatisierungskörpers. Im Extremfall kommt es zur Regenbildung innerhalb der Produktionshallen bzw. innerhalb der Wohnräume.

Damit die bekannten Antikondensationsbeschichtungen und -farbaufträge bei diesen extremen Bedingungen und entsprechend viel Kondensatbildung noch funktionieren, müssen sie besonders dick auf die Klimatisierungskörper aufgetragen werden. Dieses ist jedoch deswegen nachteilig, da so zum einen die Gefahr der Delaminierung bzw. eines Abpellens der aufgetragenen Beschichtungen und Farbaufträge besteht, zum anderen stellen die Beschichtungen und Farbaufträge eine Temperaturisolierungsschicht für die Klimatisierungskörper dar, die dadurch massiv an Leistung einbüßen.

Um zur Lösung des Problems der Öffentlichkeit ein Antibeschlagmittel zur Verfügung stellen zu können, dass kontinuierlich zumindest über einen Zeitraum von 20 Stunden, das entspricht weitgehend dem Klimatisierungszeitraum von einem Tag in tropischen Gebieten, zuverlässig arbeitet und das die Leistung von Klimatisierungskörpern zumindest nicht einschränkt, schlägt der Erfinder die Verwendung eines Stoffvlieses vor. Bevorzugt ist ein Vlies aus Kunststofffasern, insbesondere aus Polyester. Polyester hat den Vorzug, keinerlei Wasser in das Fasermaterial aufzunehmen. Insofern ist ganz besonders die Verwendung eines Stoffvlieses aus Fasern bevorzugt, die kein oder nur ein geringes Wasseraufnahmevermögen aufweisen.

Das Stoffvlies, ganz besonders bevorzugt das Polyestervlies, ist möglichst vollflächig auf die Oberfläche des Festkörpers derart aufzukleben, dass die zumindesteine faserige Seite des Stoffvlieses der Umgebungsluft zugewandt ist.

Die vollflächige Verklebung des Stoffvlieses mit der Festkörperoberfläche ist wegen sonst zwischen Vlies und Festkörper möglicherweise auftretender Kondensation bedeutsam. Das durch die Kondensation gebildete Kondensat könnte in einem solchen Fall durch das Vlies fließen. Ohne auf die Klebstoffe in irgendeiner Art und Weise beschränkt zu sein, bieten sich zur Verklebung von Vlies und Festkörper besonders Epoxydharze, Polyurethane, Acrylate und Silikone an. Auch selbstklebende Vliesstoffe sind vorstellbar.

Als Festkörper, für die das Stoffvlies zur Verwendung als Antibeschlagmittel bevorzugt vorgesehen ist, werden insbesondere Klimatisierungskörper bevorzugt, ohne darauf im Sinne der vorliegenden Erfindung beschränkt zu sein.

Die positive Wirkung des Stoffvlieses in seiner Verwendung als Antibeschlagmittel insbesondere für Klimatisierungskörper wird durch die extrem vergrößerte Oberfläche des mit Stoffvlies beklebten Klimatisierungskörpers begründet, die sich nun aus der Oberfläche aller einzelnen Fasern, die in Kontakt mit der Umgebungsluft stehen, zusammensetzt. Die in der Summe gleich bleibende Menge an Kondensat fällt nun nicht mehr nur an der sehr begrenzten Oberfläche des unbeklebten Klimatisierungskörpers an, wo die Menge an Kondensat sofort in Tröpfchenform vorliegt und infolgedessen abfließt oder abregnet, sondern liegt in einem hauchdünnen Film um die Fasern herum vor. Selbst unter extremen Bedingungen, wie sie beispielhaft in Ägypten

bei 36°C Umgebungsluft mit 60% relativer Luftfeuchtigkeit,
einer Taupunkttemperatur von 24,5°C
und einer Temperatur von 6°C des als Kühlmittel eingesetzten Wassers

in einem Klimatisierungskörper in Form einer Aluminium-Rollbondplatte getestet wurden, konnte nach drei Tagen (72 Stunden) Dauertest keine Tröpfchenbildung an der mit Polyestervlies beklebten Rollbondplatte festgestellt werden.

Die filmartige Verteilung des Kondensats auf die Fasern des Vlieses wird begünstigt, wenn die Fasern kein oder nur ein geringes Wasseraufnahmevermögen in das Material der Fasern aufweisen, weshalb deren entsprechende Ausführung, wie oben bereits ausgeführt, bevorzugt ist. Mit der Beaufschlagung der Fasern mit einem hauchdünnen Kondensatfilm beginnt gleichzeitig die sofortige Wiederverdunstung des Kondensats in die Umgebungsluft. Durch diese sofortige Verdunstung ist ein praktisch ununterbrochener Einsatz eines mit Stoffvlies beklebten Klimatisierungskörpers möglich.

Im Rahmen der vorliegenden Erfindung gilt insbesondere auch ein Klimatisierungskörper als beansprucht, der von einem Klimatisierungsmedium in seinem Inneren durchströmbar ist und der außenseitig zumindest teilweise ein Antibeschlagmittel aufweist, dadurch gekennzeichnet, dass dieses Antibeschlagmittel ein Stoffvlies ist.

Klimatisierungskörper im Sinne der vorliegenden Erfindung sind insbesondere solche Körper oder Paneele, die von einem Klimatisierungsmedium durchströmt werden können und die in der Lage sind, die Temperatur der Flüssigkeit zumindest teilweise über zumindest einen Teil ihrer Oberfläche an die Umgebungsluft abzugeben. Typische Vertreter solcher Klimatisierungskörper sind neben einfachen Rohren Rollbondplatten und Wärmetauscherplatten. Letztere werden beispielsweise in der **DTaA-26 04 879** und auch in der WO-A-01/59371 beschrieben, wobei im Fall der WO-Schrift die beschriebene Wärmetauscherplatte rückseitig eine Isolierungsschicht aufweist, die für die vorliegende Erfindung selbstverständlich zugunsten einer Wärme und Kälte abstrahlfähigen Konditionierungsplatte ausgetauscht werden sollte. Auch ganz einfache Metall- oder Kunststoff-Hohlplatten, die bevorzugt mäanderförmig von einer Flüssigkeit durchströmt werden können sind Klimatisierungskörper im Sinne der vorliegenden Erfindung.

In einer besonders bevorzugten Ausführungsform sind die Klimatisierungskörper flüssigkeitsdurchflutete Mittel zum Temperieren von Räumen

- mit einer ersten Metallplatte,
- mit einer der ersten Metallplatte gegenüberliegenden zweiten Metallplatte, die mit der ersten Metallplatte unlöslich verbunden ist,
- mit einer Vielzahl von Durchflutungskanälen, die zwischen den beiden Metallplatten mittels Rollbond-Verfahren ausgebildet sind, wobei jeder aus der Vielzahl von Durchflutungskanälen jeweils eine in allen Fällen einheitliche umschlossene Querschnittsfläche (V) aufweist,

wobei

- die Durchflutungskanäle kapillar ausgebildet sind und
- eine jeweilige Querschnittsfläche (V) in einem Bereich von 4 mm$^2$ einschließlich bis 15 mm$^2$ einschließlich aufweisen.

Solche flüssigkeitsdurchflutete Mittel zum Temperieren von Räumen werden beansprucht in der EP-A-1 731 845, wobei diese flüssigkeitsdurchfluteten Mittel in all ihren dort beschriebenen Ausführungsformen auch als ganz besonders bevorzugte Ausführungsformen von Klimatisierungskörpern im Sinne der vorliegenden Erfindung gelten.

Die erfindungsgemäßen Klimatisierungskörper weisen als Antibeschlagmittel ein Stoffvlies bevorzugt aus Fasern auf, die kein oder nur ein geringes Wasseraufnahmevermögen aufweisen. Bevorzugt ist ein Vlies aus Kunststofffasern, insbesondere aus Polyester. Die derart ausgestatteten Klimatisierungskörper sind, entsprechend den Erkenntnissen des Erfinders, wegen ihrer durch das Vlies stark vergrößerten Oberfläche zur Umgebungsluft hin in einem ganz besonders großen Maße geeignet, sowohl eine effektive Abkühlung, wie auch eine effektive Aufheizung der Räume, in denen sie eingesetzt werden, zu gewährleisten.

Das Stoffvlies, ganz besonders bevorzugt das Polyestervlies, ist möglichst vollflächig auf die Oberfläche des Klimatisierungskörpers derart aufzukleben, dass die zumindest eine faserige Seite des Stoffvlieses der Umgebungsluft zugewandt ist.

Ohne auf die Klebstoffe in irgendeiner Art und Weise beschränkt zu sein, bieten sich zur Verklebung von Vlies und Klimatisierungskörper besonders Epoxydharze, Polyurethane, Acrylate und Silikone an. Auch selbstklebende Vliesstoffe sind vorstellbar.

Als Klimatisierungsmedium für die hier vorgeschlagenen Klimatisierungskörper in all ihren Ausführungsformen gelten Flüssigkeiten als bevorzugt, wobei hier insbesondere Wasser bewährt und deshalb auch besonders bevorzugt ist. Dabei kann das Wasser gegebenenfalls noch Zusätze wie Alkohole und Korrosionsschutzmittel aufweisen. Neben Wasser sind auch Öle, insbesondere niederviskose Öle sowie Propan-Butan-Gemische möglich. In einer ganz besonders bevorzugten Ausführungsform ist das Klimatisierungsmedium ausgesucht aus der Liste, umfassend:

- 1,1,1, 2-Tetrafluorethan (das ist Solkane® 134a)
- 1, 1-Difluorethan (das ist Solkane® 152a)
- Difluormethan Pentafluorethan/1, 1, 1, 2-Tetrafluorethan (das ist Solkane® 407C)
- Difluormethan Pentafluorethan (das ist Solkane® 410)

Die Produkte der Solkane®-Reihe sind erhältlich über die Firma Solvay, Hans-Böckler-Allee 20, 30173 Hannover, Deutschland.

Genauso sind bekannte Kühlmittel wie Freon® und Frigen® als Klimatisierungsmedium im Sinne der vorliegenden Erfindung vorstellbar.

In den zuvor erwähnten Testarbeiten in Ägypten zeigte sich überraschend, dass eine Rollbondplatte mit einer flächenbezogenen Leistung von ca. 200 $W/m^2$ durch die vollflächige Belebung mit einem Polyestervlies, das eine flächenbezogene Masse von 120 $g/m^2$ aufwies, eine Steigerung der flächenbezogenen Leistung auf ca. 450 $W/m^2$ erfuhr, was mit der vergrößerten Oberfläche des Klimatisierungskörpers und mit der Möglichkeit, niedrigere Temperaturen des die mit Polyestervlies beklebten Rollbondplatte durchströmenden Wassers wählen zu können, erklärt wird. Eine Rollbondplatte, die zuvor mit herkömmlichen Antikondensationsbeschichtungen versehen war, kam bei dieser Gelegenheit nur auf eine flächenbezogenen Leistung von 270 $W/m^2$. Alle Untersuchungen wurden bei identischen äußeren Bedingungen insbesondere hinsichtlich Umgebungslufttemperatur und -feuchtigkeit und Temperatur des die Rollbondplatten durchströmenden Wassers durchgeführt.

Die Klimatisierungskörper im Sinne der vorliegenden Erfindung können mit dem Stoffvlies vollständig bedeckt sein, so dass sie von dem Stoffvlies vollständig umschlossen werden. In einem solchen Fall durchstoßen bevorzugt lediglich die Anschlüsse, durch die das Klimatisierungsmedium in den Klimatisierungskörper einerseits eingeleitet und andererseits abgeführt werden kann, das den Klimatisierungskörper umhüllende Vlies.

In einer bevorzugten Ausführungsform ist der Klimatisierungskörper als Paneele mit rückseitiger Wanne ausgebildet. Vorderseitig weist die Paneele als Antibeschlagmittel ein Stoffvlies auf, wie es zuvor beschrieben und beansprucht wurde und das bevorzugt vollflächig auf die Vorderseite der Paneele geklebt ist. Rückseitig weist die Paneele zumindest benachbart zur angebauten oder angeformten Wanne kein Stoffvlies auf. Ein solcher Klimatisierungskörper kann dann als Luftentfeuchter in Räumen eingesetzt werden. Während vorderseitig keinerlei Tropfenbildung in Folge von Kondensierung auf dem Klimatisierungskörper zu beobachten ist, kommt es rückseitig zu einer intensiven und gewollten Kondensierung. Das mittels der Wanne aufgefangene Kondensat kann mittels einer Abführung, die auch als Zentralabführung für eine Vielzahl solche Paneele ausgebildet sein kann, abgeleitet werden.

Da in klimatisierten Räumen stets ein Luftentfeuchter vorgesehen sein sollte, sieht ein beanspruchtes Klimatisierungssystem eine Kombination aus Klimatisierungskörpern, die mit Stoffvlies vollständig bedeckt sind, und Klimatisierungskörpern, die als Luftentfeuchter mit rückseitiger Wanne ausgebildet sind, vor.

Die nachfolgenden Figuren sollen die Erfindung weitergehend erläutern.

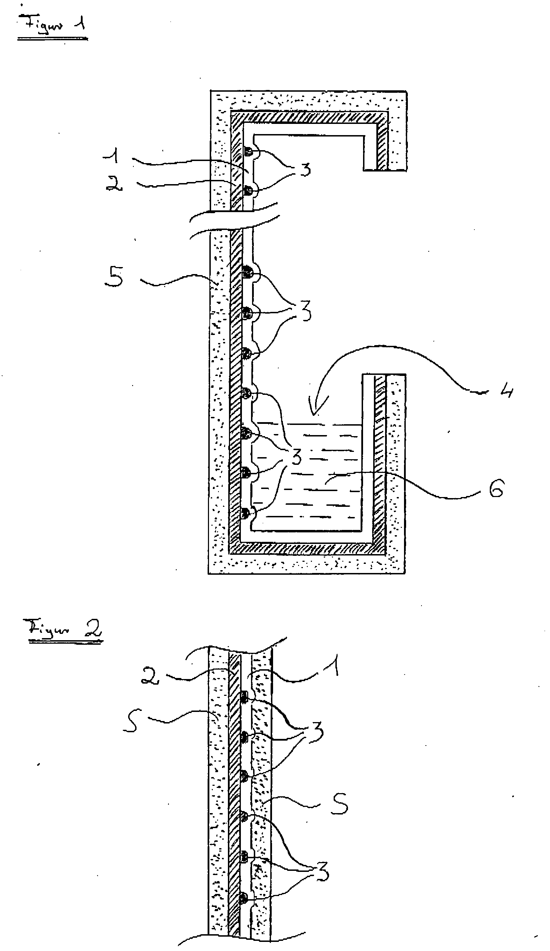

Figur 1 zeigt einen erfindungsgemäßen Klimatisierungskörper zur senkrechten Montage an einer Wand, der gleichzeitig als Luftentfeuchter benutzt werden kann. Der Klimatisierungskörper weist eine erste Metallplatte (1) und eine zweite Metallplatte (2) auf, wobei zwischen den beiden unlöslich miteinander verbundenen Metallplatten (1, 2) mittels des bekannten Rollbondverfahrens eine Vielzahl von kapillaren Durchflutungskanälen (3) mit einer jeweiligen Querschnittsfläche (V) in einem Bereich von 4 mm$^2$ einschließlich bis 15 mm$^2$ einschließlich ausgeformt sind. Der derartig aufgebaute Klimatisierungskörper ist vorderseitig als glattflächige Paneele gestaltet. Rückseitig sind die Metallplatten (1, 2) des Klimatisierungskörpers in dessen unterem Bereich als Wanne (4) aufgekantet. Die glattflächige Paneele als gesamter vorderseitiger Bereich des Klimatisierungskörpers sowie die Außenseite der Wanne (4) sind mit einem Polyestervlies (5) beklebt, während der rückseitige Bereich der Paneele sowie die Innenseite der Wanne (4) nicht mit einem solchen Polyestervlies abgedeckt ist. Somit wird mit Figur 1 die Ausführungsform eines Klimatisierungskörpers genauer dargestellt, der nur einseitig mit einem Stoffvlies bedeckt ist.

Wird nun der derart gestaltete Klimatisierungskörper mit kaltem Wasser als Klimatisierungsmedium durchströmt, kommt es bei hohen Temperaturen und hoher relativer Luftfeuchtigkeit der Außenluft zur Kondensation an der Rückseite der Paneele. Das Kondensat (6) läuft in die Wanne (4) und kann von dort abgeführt werden. Hierbei hat es sich bewährt, mehrere Klimatisierungskörper, wie sie in Figur 1 dargestellt sind, mit einer nicht dargestellten gemeinsamen Kondensatabführung zusammenzuschließen.

Ein Klimatisierungskörper, wie er in Figur 1 dargestellt ist, kann somit sowohl die Raumluft kühlen wie auch diese Luft entfeuchten.

Figur 2 zeigt als Alternative zu einem Klimatisierungskörper, wie er in Figur 1 dargestellt ist, den Ausschnitt eines erfindungsgemäßen Klimatisierungskörpers, der nicht gleichzeitig als Luftentfeuchter dienen soll. In diesem Fall sind erneut zwei Metallplatten (1, 2) derart miteinander verbunden, dass zwischen ihnen mittels des bekannten Rollbondverfahrens eine Vielzahl von kapillaren Durchflutungskanälen (3) mit einer jeweiligen Querschnittsfläche (V) in einem Bereich von 4 mm$^2$ einschließlich bis 15 mm$^2$ einschließlich ausgeformt sind. Sowohl vorderseitig wie auch rückseitig der eben und flächig ausgeführten Rollbondplatte ist ein Polyestervlies aufgeklebt, das damit den Klimatisierungskörper vollständig umschließt.

In einem nicht zeichnerisch dargestellten erfindungsgemäßen Klimatisierungssystem werden bevorzugt eine Mehrzahl solcher Klimatisierungskörper, wie sie in Figur 1 dargestellt sind, mit wenigen solcher Klimatisierungskörper, wie sie in Figur 2 dargestellt werden sollen, kombiniert. Dabei können die Rohrleitungen zur Zu- und Abführung des Kühlmittels, das die parallel oder in Reihe geschalteten Klimatisierungskörper durchströmen soll, gemeinsam sowohl für die Klimatisierungskörper, wie sie in Figur 1 dargestellt sind, wie auch für die Klimatisierungskörpern, wie sie in Figur 2 dargestellt werden sollen, genutzt werden. Auch und wie bereits zuvor erläutert werden Rohrleitungen zur gemeinsamen Kondensatabführung bevorzugt.

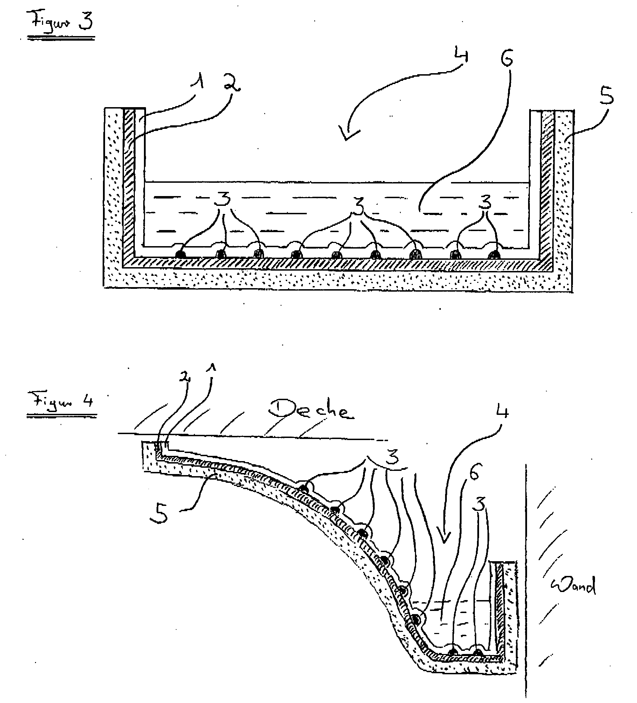

Die Figur 3 zeigt einen gleichzeitig als Luftentfeuchter zu nutzenden, erfindungsgemäßen Klimatisierungskörper, der im Unterschied zu dem Klimatisierungskörper gemäß Figur 1 zur Deckenmontage vorgesehen ist.

Der hier zu sehende Klimatisierungskörper weist eine erste Metallplatte (1) und eine zweite Metallplatte (2) auf, wobei zwischen den beiden unlöslich miteinander verbundenen Metallplatten (1, 2) mittels des bekannten Rollbondverfahrens eine Vielzahl von kapillaren Durchflutungskanälen (3) mit einer jeweiligen Querschnittsfläche (V) in einem Bereich von 4 mm$^2$ einschließlich bis 15 mm$^2$ einschließlich ausgeformt sind. Der derartig aufgebaute Klimatisierungskörper ist nach unten hin als glattflächige Paneele gestaltet. Die Metallplatten (1, 2) des hier zu sehenden Klimatisierungskörpers sind außen ringsherum als Wanne (4) aufgekantet. Die glattflächige Paneele als gesamter unterer Bereich des Klimatisierungskörpers sowie die Außenseite der Wanne (4) sind mit einem Polyestervlies (5) beklebt, während die Innenseite der Wanne (4) nicht mit einem solchen Polyestervlies abgedeckt ist. Somit wird auch mit Figur 3 die Ausführungsform eines Klimatisierungskörpers genauer dargestellt, der nur einseitig mit einem Stoffvlies bedeckt ist.

Wird nun der derart gestaltete Klimatisierungskörper mit kaltem Wasser als Klimatisierungsmedium durchströmt, kommt es bei hohen Temperaturen und hoher relativer Luftfeuchtigkeit der Außenluft zur Kondensation an der Rückseite der Paneele. Das Kondensat (6) läuft in die Wanne (4) und kann von dort abgeführt werden. Hierbei hat es sich bewährt, mehrere Klimatisierungskörper, wie sie in den Figuren 1, 2 und 4 dargestellt sind, mit einer nicht dargestellten gemeinsamen Kondensatabführung zusammenzuschließen.

Mit Figur 4 wird schließlich als Konzeptzeichnung ein auch als Luftentfeuchter zu nutzender, erfindungsgemäßer Klimatisierungskörper gezeigt, der zur Montage in einer Raumecke zwischen senkrechter Wand und waagerechter Decke vorgesehen ist. Die verwendeten Positionsbezeichnungen sind deckungsgleich mit denen aus Figur 3.

## Patentansprüche

1. Klimatisierungskörper, der von einem Klimatisierungsmedium in seinem Inneren durchströmbar ist und der außenseitig zumindest teilweise ein Antibeschlagmittel aufweist, **dadurch gekennzeichnet, dass** dieses Antibeschlagmittel ein Stoffvlies ist, wobei das Stoffvlies Fasern aufweist, die kein oder nur ein geringes Wasseraufnahmevermögen aufweisen.

2. Klimatisierungskörper nach Patentanspruch 1, **dadurch gekennzeichnet, dass** der Klimatisierungskörper ein Körper ist, ausgesucht aus der Liste, umfassend Rohre, Rollbondplatten und Wärmetauscherplatten.

3. Klimatisierungskörper nach Patentanspruch 1, **dadurch gekennzeichnet, dass** der Klimatisierungskörper flüssigkeitsdurchflutete Mittel zum Temperieren von Räumen darstellt

   • mit einer ersten Metallplatte,
   • mit einer der ersten Metallplatte gegenüberliegenden zweiten Metallplatte, die mit der ersten Metallplatte unlöslich verbunden ist,
   • mit einer Vielzahl von Durchflutungskanälen, die zwischen den beiden Metallplatten mittels Rollbond-Verfahren ausgebildet sind, wobei jeder aus der Vielzahl von Durchflutungskanälen jeweils eine in allen Fällen einheitliche umschlossene Querschnittsfläche (V) aufweist,

   wobei

   • die Durchflutungskanäle kapillar ausgebildet sind und
   • eine jeweilige Querschnittsfläche (V) in einem Bereich von 4 mm$^2$ einschließlich bis 15 mm$^2$ einschließlich aufweisen.

4. Klimatisierungskörper nach einem der Patentansprüche 1 bis 3, **dadurch gekennzeichnet, dass** das Stoffvlies ein Polyestervlies ist.

5. Klimatisierungskörper nach einem der Patentansprüche 1 bis 4, **dadurch gekennzeichnet, dass** das Stoffvlies vollflächig auf den Klimatisierungskörper geklebt ist.

6. Klimatisierungskörper nach Patentanspruch 5, **dadurch gekennzeichnet, dass** die Verklebung von Stoffvlies und Klimatisierungskörper mit einem Verklebungsmittel erfolgt ist, ausgesucht aus der Liste, umfassend Epoxydharze, Polyurethane, Acrylate und Silikone.

7. Klimatisierungskörper nach einem der Patentansprüche 1 bis 6, **dadurch gekennzeichnet, dass** der Klimatisierungskörper vollständig umschließend mit dem Stoffvlies bedeckt ist.

8. Klimatisierungskörper nach einem der Patentansprüche 1 bis 6, **dadurch gekennzeichnet, dass** der Klimatisierungskörper nur einseitig mit dem Stoffvlies bedeckt ist.

9. Klimatisierungskörper nach einem der Patentansprüche 1 bis 8, **dadurch gekennzeichnet, dass** das Klimatisierungsmedium ausgesucht ist aus der Liste, umfassend: Wasser, 1, 1, 1, 2-Tetrafluorethan, 1, 1-Difluorethan, Difluormethan/ Pentafluorethan1, 1, 1, 2-Tetrafluorethan, Difluormethan/ Pentafluorethan.

10. Klimatisierungssystem, umfassend mindestens einen Klimatisierungskörper nach Patentanspruch 7.) und einen Klimatisierungskörper nach Patentanspruch 8.).

11. Verwendung eines Stoffvlieses als Antibeschlagmittel für Festkörper, insbesondere für Klimatisierungskörper, wobei das Stoffvlies Fasern aufweist, die kein oder nur ein geringes Wasseraufnahmevermögen aufweisen.

12. Verwendung eines Stoffvlieses nach Patentanspruch 11, **dadurch gekennzeichnet, dass** das Stoffvlies ein Polyestervlies ist.

13. Verwendung eines Stoffvlieses nach einem der Patentansprüche 11 oder 12, **dadurch gekennzeichnet, dass** das Stoffvlies vollflächig auf den Festkörper geklebt ist.

14. Verwendung eines Stoffvlieses nach Patentanspruch 13, **dadurch gekennzeichnet, dass** die Verklebung von Stoffvlies und Festkörper mit einem Verklebungsmittel erfolgt, ausgesucht aus der Liste, umfassend Epoxydharze, Polyurethane, Acrylate und Silikone.

**Claims**

1. Air-conditioning body, which can be flowed through in the interior thereof by an air-conditioning medium and has, on the outside at least partially, an anti-condensation means, **characterised in that** this anti-condensation means is a nonwoven material, the nonwoven material having fibres which have no, or only a low, capacity to absorb water.

2. Air-conditioning body according to patent claim 1, **characterised in that** the air-conditioning body is a body which is selected from the list comprising pipes, roll-bonded plates and heat exchanger plates.

3. Air-conditioning body according to patent claim 1, **characterised in that** the air-conditioning body represents means, flowed through by fluid, for temperature control of rooms

- having a first metal plate,
- having a second metal plate situated opposite the first metal plate, which second metal plate is connected nondetachably to the first metal plate,
- having a large number of throughflow channels which are configured between the two metal plates by means of the roll-bonding method, each of the large number of throughflow channels respectively having a cross-sectional area (V) which is uniformly enclosed in all cases,
- the throughflow channels being configured as capillaries and
- having a respective cross-sectional area (V) in a range of 4 mm$^2$ inclusive to 15 mm$^2$ inclusive.

4. Air-conditioning body according to one of the patent claims 1 to 3, **characterised in that** the nonwoven material is a polyester nonwoven.

5. Air-conditioning body according to one of the patent claims 1 to 4, **characterised in that** the nonwoven material is glued onto the air-conditioning body over the entire surface.

6. Air-conditioning body according to patent claim 5, **characterised in that** the gluing of nonwoven material and air-conditioning body is effected with an adhesive, selected from the list comprising epoxy resins, polyurethanes, acrylates and silicones.

7. Air-conditioning body according to one of the patent claims 1 to 6, **characterised in that** the air-conditioning body is covered, completely enclosed by the nonwoven material.

8. Air-conditioning body according to one of the patent claims 1 to 6, **characterised in that** the air-conditioning body is covered only on one side by the nonwoven material.

9. Air-conditioning body according to one of the patent claims 1 to 8, **characterised in that** the air-conditioning medium is selected from the list, comprising:

water, 1,1,1,2-tetrafluoroethane, 1,1-difluoroethane, difluoromethane/pentafluoroethane, 1,1,1,2-tetrafluoroethane, difluoromethane/pentafluoroethane.

10. Air-conditioning system, comprising at least one air-conditioning body according to patent claim 7, and an air-conditioning body according to patent claim 8.

11. Use of a nonwoven material as anti-condensation means for solid bodies, in particular for air-conditioning bodies; the nonwoven material having fibres which have no, or only a low, capacity to absorb water.

12. Use of a nonwoven material according to patent claim 11, **characterised in that** the nonwoven material is a polyester nonwoven.

13. Use of a nonwoven material according to one of the patent claims 11 or 12, **characterised in that** the nonwoven material is glued onto the solid body over the entire surface.

14. Use of a nonwoven material according to patent claim 13, **characterised in that** the gluing of nonwoven material and solid body is effected with an adhesive, selected from the list comprising epoxy resins, polyurethanes, acrylates and silicones.

**Revendications**

1. Élément de climatisation, qui peut être traversé par un agent de climatisation à l'intérieur de celui-ci et qui présente, côté extérieur, au moins en partie un produit antibuée, **caractérisé en ce que** ce produit antibuée est un tissu non-tissé, dans lequel le tissu non-tissé présente des fibres, qui ne présentent aucune ou seulement une faible capacité d'absorption d'eau.

2. Élément de climatisation selon la revendication 1, **caractérisé en ce que** l'élément de climatisation est un élément, choisi parmi la liste comprenant des tubes, des plaques roll-bond et des plaques d'échangeur de chaleur.

3. Élément de climatisation selon la revendication 1, **caractérisé en ce que** l'élément de climatisation représente des produits inondés de fluide pour la mise à température de pièces

- avec une première plaque métallique,
- avec une deuxième plaque métallique opposée à la première plaque métallique, qui est reliée à la première plaque métallique de manière indissociable,
- avec une pluralité de canaux d'inondation, qui sont réalisés entre les deux plaques métalliques à l'aide du procédé roll-bond, dans lequel chacun de la pluralité de canaux d'inondation présente respectivement une section transversale (V) dans tous les cas uniforme entourée,

dans lequel

- les canaux d'inondation sont réalisés de manière capillaire et

- présentent une section transversale (V) respective dans une plage de 4 mm² compris à 15 mm² compris.

**4.** Élément de climatisation selon l'une quelconque des revendications 1 à 3, **caractérisé en ce que** le tissu non-tissé est un non-tissé en polyester.

**5.** Élément de climatisation selon l'une quelconque des revendications 1 à 4, **caractérisé en ce que** le tissu non-tissé est collé sur toute sa surface sur l'élément de climatisation.

**6.** Élément de climatisation selon la revendication 5, **caractérisé en ce que** le collage de tissu non-tissé et d'élément de climatisation se fait avec un adhésif, choisi parmi la liste comprenant des résines époxydes, des polyuréthanes, des acrylates et des silicones.

**7.** Élément de climatisation selon l'une quelconque des revendications 1 à 6, **caractérisé en ce que** l'élément de climatisation est recouvert par le tissu non-tissé de manière à être complètement entouré.

**8.** Élément de climatisation selon l'une quelconque des revendications 1 à 6, **caractérisé en ce que** l'élément de climatisation n'est recouvert de tissu non-tissé que d'un seul côté.

**9.** Élément de climatisation selon l'une quelconque des revendications 1 à 8, **caractérisé en ce que** l'agent de climatisation choisi dans la liste comprenant: eau, 1,1,1,2-tétrafluoroéthane, 1,1-difluoroéthane, difluorométhane / pentafluoroéthane / 1,1,1,2-tétrafluoroéthane, difluorométhane / pentafluoroéthane.

**10.** Système de climatisation, comprenant au moins un élément de climatisation selon la revendication 7 et un élément de climatisation selon la revendication 8.

**11.** Utilisation d'un tissu non-tissé en tant que produit antibuée pour corps solide, en particulier pour élément de climatisation, dans laquelle le tissu non-tissé présente des fibres qui ne présentent aucune ou seulement une faible capacité d'absorption d'eau.

**12.** Utilisation d'un tissu non-tissé selon la revendication 11, **caractérisée en ce que** le tissu non-tissé est un non-tissé en polyester.

**13.** Utilisation d'un tissu non-tissé selon l'une quelconque des revendications 11 ou 12, **caractérisée en ce que** le tissu non-tissé est collé sur toute sa surface sur le corps solide.

**14.** Utilisation d'un tissu non-tissé selon la revendication 13, **caractérisée en ce que** le collage de tissu non-tissé et de corps solide se fait avec un adhésif, choisi parmi la liste comprenant des résines époxydes, des polyuréthanes, des acrylates et des silicones.

Figur 1

Figur 2

Figur 3

Figur 4

Decke

Wand

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 10113281 A
- DE 10012997 A1
- EP 1512915 A2
- EP 0552690 A1
- EP 0844006 B
- WO 0159371 A
- EP 1731845 A